# EUROPEAN PATENT APPLICATION

(11) **EP 2 023 283 A1**
(43) Date of publication of application: **11.02.2009**
(21) Application number: 08162015.5
(22) Date of filing: 07.08.2008
(51) Int. Cl.: G06Q 30/00

(54) **System and method for providing product information in LAN**

(30) Priority: 07.08.2007 KR 20070079245
(71) Applicant: Samsung Electronics Co., Ltd., Suwon-si, Gyeonggi-Do (KR)
(72) Inventor: Choi, Woo-Jun, Gyeonggi-do (KR); Kim Jae-Ho, Gyeonggi-do (KR); Lee, Jeong-Eun, Gyeonggi-do (KR); Han Young-Seop, Gyeonggi-do (KR); Sim, Dae-Hyun, Gyeonggi-do (KR)
(74) Representative: Harrison Goddard Foote

(57) **Abstract**

Provided is a system and a method for reporting data in a Local Area Network (LAN). The system includes at least one router for broadcasting both product information of an entire shopping center including product advertisement information and product information including identification information of each of shopping center local communication terminals providing the product advertisement information, and identification information of each of shopping center local communication terminals located within a coverage area of each of the at least one router; and a user local communication terminal for receiving the product information of the entire shopping center and the identification information of each of the shopping center local communication terminals located within the coverage area of the at least one router, detecting the product advertisement information included in the received product information of the entire shopping center and displaying the detected product advertisement information, finding product information including any one of the received identification information among the received product information of the entire shopping center, analyzing the found product information to detect product advertisement information of the found product information, and first displaying the detected product advertisement information.

## Description

### BACKGROUND OF THE INVENTION

### 1. Field of the Invention

The present invention relates to a Local Area Network (LAN), and more particularly to a system and a method for reporting data in a LAN.

### 2. Description of the Related Art

Usually, the term "LAN" refers to a communication network formed by connecting multiple local communication terminals located within 10 km from one another, and the term "local communication terminal" refers to a terminal that supports local communication. Specifically, a local communication terminal can perform local communication with another local communication terminal by using either ZIGBEE® communication, BLUETOOTH® communication, Ultra-WideBand (UWB) communication, or other types of communication. ZIGBEE® and BLUETOOTH®, as used herein, each refer to specifications for suites of communication protocols for Wireless Personal Area Networks (WPANs). For example, local communication terminals supporting the ZIGBEE® communication can perform local communication with one another in a ZIGBEE® communication scheme.

Now, a LAN is used to implement ubiquitous home automation, building automation, factory automation, etc., and accordingly, has a gradually widening application range.

For example, local communication terminals can be installed in relevant stores included in a shopping center building (or a shopping center), and a LAN can be established by using installed local communication terminals. Then, product information of each of the stores can be broadcast to users over the established LAN. Further, users can find their desired products by using the broadcasted product information.

However, the LAN for the shopping center (hereinafter, "shopping center LAN") provides the users with only product information of the entire shopping center, but does not provide product information provided by stores located around a user. Therefore, the user suffers the inconvenience that they should separately find the product information provided by the stores located around them.

### SUMMARY OF THE INVENTION

Accordingly, the present invention has been made to solve the above-stated problems occurring in the prior art, and the present invention provides a system and a method for first providing a user with product advertisement information provided by stores located around the user, wherein the stores are included in a shopping center.

In accordance with an aspect of the present invention, there is provided a system for providing product information in a Local Area Network (LAN), the system including at least one router for broadcasting both product information of an entire shopping center including product advertisement information and product information including identification information of each of shopping center local communication terminals providing the product advertisement information, and identification information of each of shopping center local communication terminals located within a coverage area of each of the at least one router; and a user local communication terminal for receiving the product information of the entire shopping center and the identification information of each of the shopping center local communication terminals located within the coverage area of the at least one router, detecting the product advertisement information included in the received product information of the entire shopping center and displaying the detected product advertisement information, finding product information including any one of the received identification information among the received product information of the entire shopping center, analyzing the found product information to detect product advertisement information of the found product information, and first displaying the detected product advertisement information.

In accordance with another aspect of the present invention, there is provided a method for providing product information in a LAN, the method including broadcasting, by at least one router, both product information of an entire shopping center including product advertisement information and product information including identification information of each of shopping center local communication terminals providing the product advertisement information, and identification information of each of shopping center local communication terminals located within a coverage area of the at least one router; receiving, by the user local communication terminal, the product information of the entire shopping center and the identification information; detecting, by the user local communication terminal, the product advertisement information included in the received product information of the entire shopping center and displaying the detected product advertisement information; finding, by the user local communication terminal, product information including any one of the received identification information among the received product information of the entire shopping center; and analyzing, by the user local communication terminal, the found product information to detect product advertisement information and first displaying the detected product advertisement information.

### BRIEF DESCRIPTION OF THE DRAWINGS

The above and other exemplary features, aspects, and advantages of the present invention will be more apparent from the following detailed description taken in conjunction with the accompanying drawings, in which:
FIG. 1 is an illustrative view showing a configuration of a shopping center LAN according to an exemplary embodiment of the present invention;
FIG. 2 illustrates a structure of product information according to an exemplary embodiment of the present invention;
FIG. 3 is a block diagram illustrating a configuration of a user local communication terminal according to an exemplary embodiment of the present invention;
FIG. 4 is a flowchart illustrating an operation performed by the user local communication terminal according to an exemplary embodiment of the present invention; and
FIG. 5 is an illustrative view of a screen image for providing product information of nearby stores by the user local communication terminal according to a location of the user local communication terminal according to an exemplary embodiment of the present invention.

### DETAILED DESCRIPTION OF THE EXEMPLARY EMBODIMENTS

Hereinafter, exemplary embodiments of the present invention will be described in detail with reference to the accompanying drawings. Also, in the following description of the present invention, a detailed description of known functions and configurations incorporated herein will be omitted when it may make the subject matter of the present invention rather unclear.

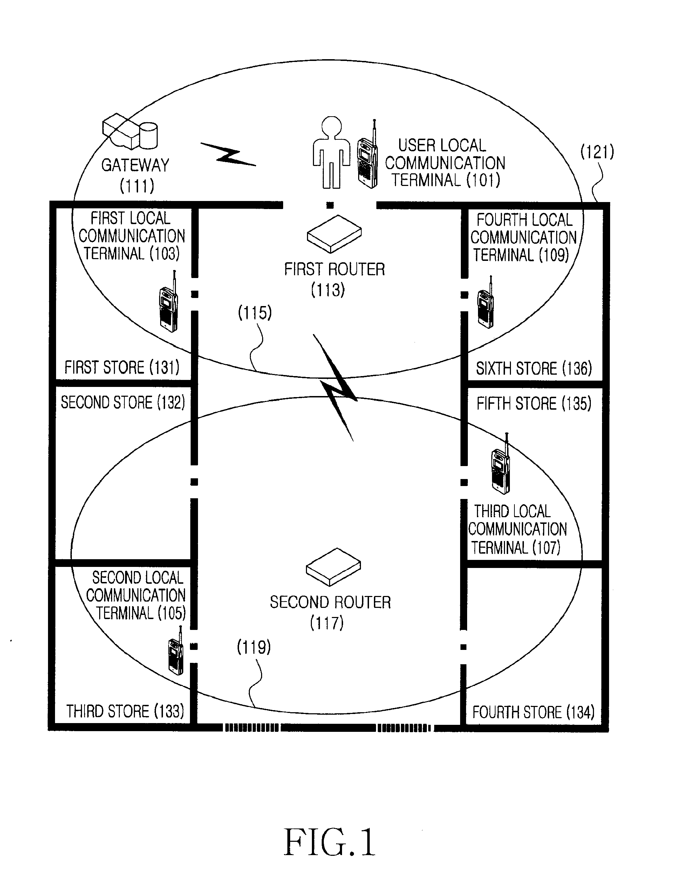

FIG. 1 is an illustrative view showing a configuration of a shopping center LAN according to an exemplary embodiment of the present invention. In FIG. 1, which illustrates one floor 121 of a shopping center building, a shopping center LAN includes a first local communication terminal 103, a second local communication terminal 105, a third local communication terminal 107, a fourth local communication terminal 109, a gateway 111, a first router 113, and a second router 117. Herein, the first, second, third, and fourth local communication terminals 103, 105, 107, and 109 are located at relevant stores, respectively, and are thus referred to as "shopping center local communication terminals" 103, 105, 107, and 109 in all.

The first router 113 performs local communication with the first local communication terminal 103 and the fourth local communication terminal 109 included in a coverage area 115 of the first router 113. Also, the second router 117 performs local communication with the second local communication terminal 105 and the third local communication terminal 107 included in a coverage area 119 of the second router 117. Also, the gateway 111 performs local communication with the first router 113, and the first router 113 performs local communication with the second router 117.

Herein, one local communication terminal may perform local communication with another local communication terminal by using either ZIGBEE® communication, BLUETOOTH® communication, Ultra-WideBand (UWB) communication, or other types of communication.

The first local communication terminal 103 stores product information of a first store 130 therein, and transmits the stored product information of the first store 130 to the first router 113. The fourth local communication terminal 109 transmits product information of a sixth store 135 to the first router 113.

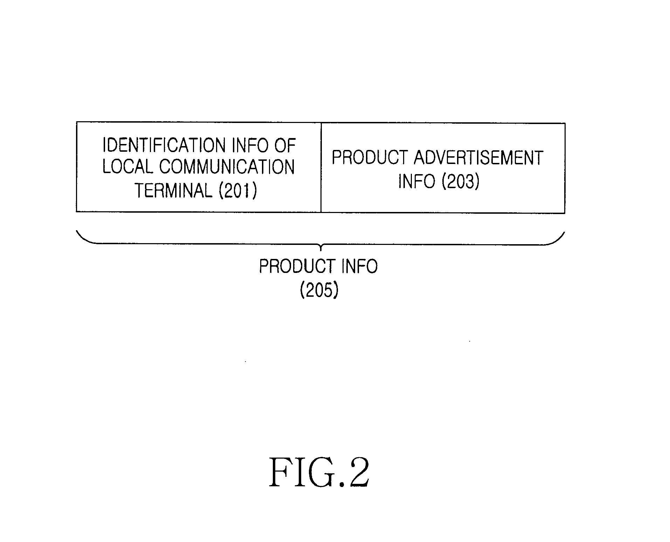

Herein, product information will be described with reference to FIG. 2. In FIG. 2, the product information 205 is product information, and includes identification information 201 of a local communication terminal and product advertisement information 203.

The identification information 201 of the local communication terminal is information for identifying the local communication terminal in which the product information 205 is stored. Each of the local communication terminals has its unique identification information. For example, when a local communication terminal is a terminal using a ZIGBEE® communication scheme, identification information 201 of the local communication terminal may be an Institute of Electrical and Electronics Engineers (IEEE) address uniquely assigned to each ZIGBEE® communication device. The product advertisement information 203 is information for advertising a product, and may include a product name, a price, a brand, a store name, a store location, a store telephone number, and the like.

Referring back to FIG. 1, the second local communication terminal 105 stores product information of a third store 132 therein, and transmits the stored product information of the third store 132 to the second router 117. Also, the third local communication terminal 107 stores product information of a fifth store 134 therein, and transmits the stored product information of the fifth store 134 to the second router 117.

Also, the first router 113 receives product information from each of the shopping center local communication terminals located within the coverage area 115 of the first router 113, and transmits the received product information to the gateway 111. Specifically, the first router 113 receives the product information of the first store 130 from the first local communication terminal 103, and receives the product information of the sixth store 135 from the fourth local communication terminal 109. Then, the first router 113 transmits the received product information of the first store 130 and the received product information of the sixth store 135 to the gateway 111. Then, the first router 113 stores therein unique identification information of each of the shopping center local communication terminals located within the coverage area 15 of the first router 113 and identification information of the first router 113. Specifically, the first router 113 stores therein the identification information of the first local communication terminal 103, the identification information of the fourth local communication terminal 109, and the identification information of the first router 113.

Herein, the identification information of the router as described above is information for identifying an optional router, and accordingly, each router has its own unique identification information. For example, when a router is a router using a ZIGBEE® communication scheme, identification information of the router may be an IEEE address uniquely assigned to each ZIGBEE® communication device.

Thereafter, the first router 113 receives product information of an entire shopping center from the gateway 111, and broadcasts the received product information of the entire shopping center, the previously stored identification information of each of the shopping center local communication terminals, and the previously stored identification information of the first router 13. Specifically, the first router 113 receives the product information of the entire shopping center including multiple pieces of the product information of the first, third, fifth, and sixth stores 130, 132, 134, and 135. Then, the first router 113 broadcasts the received product information of the entire shopping center, the previously stored identification information of each of the first and fourth local communication terminals 103 and 109, and the previously stored identification information of the first outer 113.

Then, the second router 117 receives product information from each of the local communication terminals located within the coverage area 119 of the second router 117, and transmits the received product information to the gateway 111 through the first router 113. Specifically, the second router 117 receives the product information of the third store 132 from the second local communication terminal 105, and receives the product information of the fifth store 134 from the third local communication terminal 107. Then, the second router 117 transmits the received product information of the third store 132 and the received product information of the fifth store 134 to the gateway 111 through the first router 113. Then, the second router 117 stores therein unique identification information of each of the shopping center local communication terminals located within the coverage area 119 of the second router 117, and the identification information of the second router 117. Specifically, the second router 117 stores therein the identification information of each of the second and third local communication terminals 105 and 107, and the identification information of the second router 117.

Thereafter, the second router 117 receives the product information of the entire shopping center from the gateway 111, and broadcasts the received product information of the entire shopping center, the previously stored identification information of the shopping center local communication terminals, and the previously stored identification information of the second router 117. Specifically, the second router 117 receives the product information of the entire shopping center including multiple pieces of the product information of the first, third, fifth, and sixth stores 130, 132, 134, and 135 through the first router 113. Then, the second router 117 broadcasts the received product information of the entire shopping center, the previously stored identification information of each of the second and third local communication terminals 105 and 107, and the previously stored identification information of the second router 117.

Then, routers located on an optional floor of the shopping center (not illustrated) also transmit product information of stores located on the optional floor to the gateway 111, and each of the routers of the optional floor stores therein identification information of each of local communication terminals located within its coverage area. Then, each of the routers receives the product information of the entire shopping center from the gateway 111, and broadcasts the received product information of the entire shopping center and the previously stored identification information of each of the local communication terminals and its unique identification information.

The gateway 111 receives multiple pieces of the product information of the shopping center local communication terminals located within the coverage area 115 of the first router 113 from the first router 113, and receives multiple pieces of the product information of the shopping center local communication terminals located within the coverage area 119 of the second router 117 from the second router 117. Then, the gateway 111 receives multiple pieces of product information of stores from the routers located on the optional floor. Then, the gateway 111 collects the received product information to generate product information of the entire shopping center, and transmits the generated product information of the entire shopping center to the all routers installed in the shopping center building.

A user local communication terminal 101 is a local communication terminal that optional users can carry with them. For example, the user local communication terminal 101 may be either a mobile phone equipped with a local communication unit for performing local communication, a Personal Digital Assistant (PDA), a Motion Picture Experts Group (MPEG)-1 Audio Layer-3 (MP3) player, etc.

When entering the shopping center building, the user local communication terminal 101 receives the product information of the entire shopping center from an optional router, identification information of each of local communication terminals located within a coverage area of the optional router, and identification information of the optional router. Then, the user local communication terminal 101 finds product advertisement information corresponding to the received identification information of each of the local communication terminals from among product advertisement information of the entire shopping center, and displays the found product advertisement information first. Then, the user local communication terminal 101 displays product advertisement information that does not correspond to the identification information of each of the local communication terminals received in such a manner as to follow the first-displayed product advertisement information.

Specifically, the user local communication terminal 101 compares identification information of a local communication terminal included in optional product information from among the received product information of the entire shopping center with the received identification information of each of the local communication terminals. If the identification information of the local communication terminal included in the optional product information is equal to any one of the received multiple pieces of the identification information of the local communication terminals, the user local communication terminal 101 selects the optional product information. By repeating the process as described above, the user local communication terminal 101 selects product information corresponding to the received identification information of each of the local communication terminals from among the product information of the entire shopping center. Then, the user local communication terminal 101 analyzes the selected product information to detect product advertisement information of the selected product information, and first displays the detected product advertisement information.

The user local communication terminal 101 also analyzes product information unselected among the product information of the entire shopping center to detect product advertisement information of the unselected product information, and first displays the detected product advertisement information in such a manner as to follow the first displayed product advertisement information.

For example, if the user local communication terminal 101 is located within the coverage area 115 of the first router 113, the user local communication terminal 101 may display product advertisement information of the first store 130 and product advertisement information of the sixth store 135 among the product information of the entire shopping center first, and may thereafter display product advertisement information of stores other than the first and sixth stores 130 and 135 following the product advertisement information of the first and sixth stores 130 and 135. As another example, if the user local communication terminal 101 is located within the coverage area 119 of the second router 117, the user local communication terminal 101 may display product advertisement information of the third store 132 and product advertisement information of the fifth store 134 among the product advertisement information of the entire shopping center first, and may thereafter display product advertisement information of stores other than the third and fifth stores 132 and 134.

Accordingly, the user local communication terminal 101 can first display product advertisement information of nearby stores according to a current location of the user.

Also, when the user local communication terminal 101 initially enters the shopping center and displays product advertisement information, or when previously displayed product advertisement information changes due to the location movement of the user and the user local communication terminal 101 displays the change of the product advertisement information, the user local communication terminal 101 can inform the user of the display change of the product advertisement information by using at least one of a vibration and a sound. For example, when the user local communication terminal 101 initially enters the coverage area 115 of the first router 113, while first displaying the product information of the first store 130 and the product information of the sixth store 135, the user local communication terminal 101 may inform the user of the display of the product advertisement information with a sound. As another example, when the user local communication terminal 101 moves the coverage area 115 of the first router 113 to the coverage area 119 of the second router 117 of the first router 113, while first displaying the product information of the third store 132 and the product information of the fifth store 134, the user local communication terminal 101 may inform the user of the display change of the product advertisement information with a sound.

Accordingly, the user local communication terminal 101 can inform the user of an initial display or the display change of the product advertisement information according to a current location of the user.

When the location of each of routers is registered in map information of the shopping center building and multiple pieces of identification information of routers located in the shopping center building, in such a manner that the location of each of the routers may correspond to the identification information of each of the routers, the user local communication terminal 101 can approximately display a location of the user on a map of the shopping center building by using a request of the user or an automatically registered location of each of the routers. Specifically, when the user local communication terminal 101 is located within a coverage area of an optional router, the user local communication terminal 101 receives, from the optional router, the product information of the entire shopping center, identification information of each of shopping center local communication terminals located within the coverage area of the optional router, and identification information of the optional router. Then, the user local communication terminal 101 detects a location of the router equivalent to the received identification information of the optional router, and displays the location of the user on the map of the shopping center building in such a manner that the location of the user may approach the detected location of the router. Then, the user local communication terminal 101 displays the map information of the shopping center building in which the location of the user is expressed.

For example, when the user local communication terminal 101 is located within the coverage area 115 of the first router 113, the user local communication terminal 101 can display the map information of the shopping center building in which a location of the user is expressed in response to a request of the user in such a manner that the location of the user may approach a location of the first router 113.

Hence, the user local communication terminal 101 can provide the user with map information of the shopping center building in which a current location of the user is expressed.

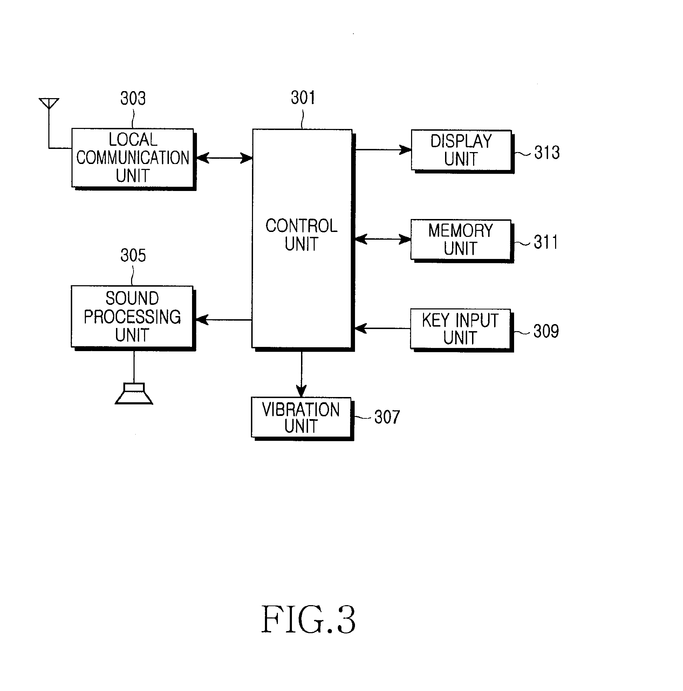

FIG. 3 is a block diagram illustrating a configuration of the user local communication terminal 101 according to an exemplary embodiment of the present invention. In FIG. 3, the user local communication terminal 101 includes a control unit 301, a local communication unit 303, sound-processing unit 305, a vibration unit 307, a key input unit 309, a memory unit 311, and a display unit 313.

Herein, the local communication unit 303 performs local communication, and receives data from another local communication terminal, or transmits data stored in the memory unit 311 to another local communication terminal. The local communication unit 303 may be an optional module according to a local communication scheme. For example, if the local communication unit 303 performs local communication in a ZIGBEE® scheme, it may be a ZIGBEE® communication module. Particularly, in the present invention, the local communication unit 303 receives, from an optional router, the product information of the entire shopping center, identification information of each of shopping center local communication terminals located within a coverage area of the optional router, and identification information of the optional router.

The sound-processing unit 305 converts a sound signal provided by the control unit 301 into an audible sound, amplifies or attenuates the converted audible sound in response to an output sound volume level set according to the input of a user, and then outputs the amplified or attenuated audible sound. The vibration unit 301 vibrates the user local communication terminal 101 for a predetermined period of time according to the control of the control unit 301. The key input unit 309 includes function keys for performing the function of the local communication terminal, and accordingly, generates a key signal responding to a key pressed by the user to output the generated key signal to the control unit 301.

The display unit 313 displays a current state and an operational state of the user local communication terminal 101 according to the control of the control unit 301, and can be configured usually by a Liquid Crystal Display (LCD) or by Organic Light-Emitting Diodes (OLED). The memory unit 311 stores therein data necessary to control the local communication terminal. Particularly, in the present invention, the memory unit 311 previously stores therein the map information of the shopping center building, identification information of each of routers, and router location information in which a location of each of the routers is registered in such a manner that the location of each of the routers may correspond to the identification information of each of the routers, and stores therein the product information of the entire shopping center transmitted from an optional router.

The control unit 301 controls each configuration unit of the user local communication terminal 101, in order to provide functions of the user local communication terminal 101. Particularly, in the present invention, by using the received product information of the entire shopping center, the received identification information of each of the local communication terminals, and the received identification information of the router, the control unit 301 can display product information of each of the stores located near the user local communication terminal 101 first, and can thereafter display, to the user, the map information of the shopping center building in which a location of the user is approximately expressed.

Specifically, through the local communication unit 303, the control unit 301 receives the product information of the entire shopping center, the identification information each of the local communication terminals, and the identification information of the optional router. Then, the control unit 301 compares identification information of a local communication terminal included in optional product information from among the received product information of the entire shopping center with the received identification information of each of the local communication terminals. If the identification information of the local communication terminal included in the optional product information is equal to any one of the received multiple pieces of the identification information of the local communication terminals, the control unit 301 selects the optional product information from among the product information of the entire shopping center. By repeating the process as described above, the control unit 301 selects product information corresponding to the received identification information of each of the local communication terminals from among the product information of the entire shopping center. Then, the control unit 301 analyzes the selected product information to detect product advertisement information of the selected product information, and first displays the detected product advertisement information on the display unit 313.

Then, the control unit 301 analyzes product information unselected among the product information of the entire shopping center, detects product advertisement information, and then displays the detected product advertisement information on the display unit 313 in such a manner as to follow the first displayed product advertisement information. At this time, the control unit 301 generates a vibration/sound through at least one of the vibration unit 307 and the sound-processing unit 305, and informs the user of the display of the product advertisement information.

Also, the control unit 301 detects a location of the router equivalent to identification information of the router which is automatically received or received in response to a request of the user, and expresses a location of the user in the map information of the shopping center building in such a manner as to approach the detected location of the router. Then, the control unit 301 can display, on the display unit 313, the map information of the shopping center building in which the location of the user is expressed.

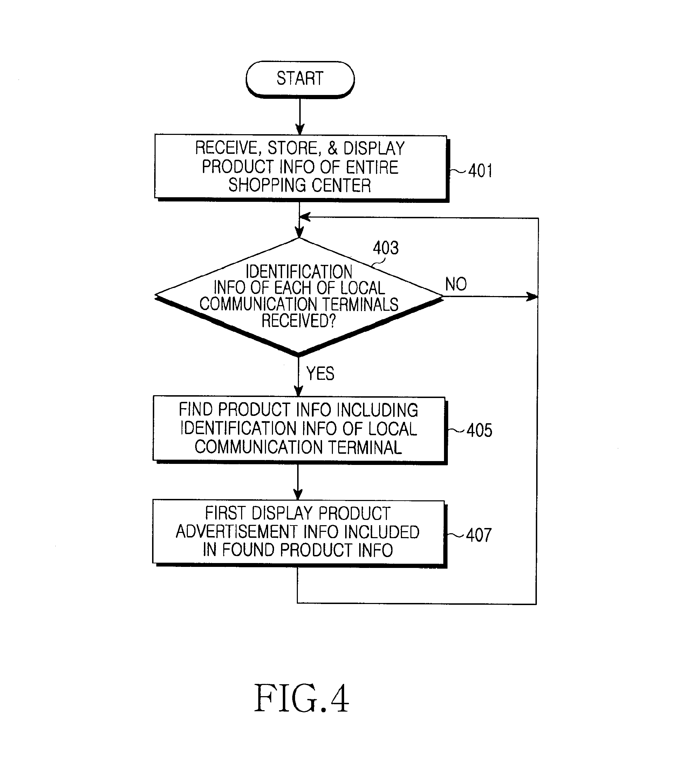

FIG. 4 is a flowchart illustrating an operation performed by the user local communication terminal according to an exemplary embodiment of the present invention.

Referring to FIG. 4, in step 401, the user local communication terminal 101 receives and stores product information of the entire shopping center and identification information of an optional router from the optional router. Then, the user local communication terminal 101 analyzes the stored product information of the entire shopping center to detect product advertisement information of the entire shopping center, displays the detected product advertisement information of the entire shopping center, and then proceeds to step 403.

In step 403, if it is determined that the user local communication terminal 101 receives identification information of each of the shopping center local communication terminals from the optional router, the user local communication terminal 101 proceeds to step 405. However, if it is determined in step 403 that the user local communication terminal 101 does not receive the identification information of each of the shopping center local communication terminals from the optional router, the user local communication terminal 101 repeatedly performs step 403.

At step 405, the user local communication terminal 101 finds product information including the received identification information of each of the shopping center local communication terminals from among the stored product information of the entire shopping center, and proceeds to step 407.

Specifically, the user local communication terminal 101 compares identification information of a shopping center local communication terminal included in optional product information from among the received product information of the entire shopping center with the received identification information of each of the shopping center local communication terminals. If the identification information of the shopping center local communication terminal included in the optional product information is equal to any one of the received multiple pieces of the identification information of the shopping center local communication terminals, the user local communication terminal 101 selects the optional product information from among the product information of the entire shopping center. By repeating the process as described above, the user local communication terminal 101 selects product information corresponding to the received identification information of each of the shopping center local communication terminals from among the product information of the entire shopping center. By repeating the process described above, the user local communication terminal 101 finds product information including the received identification information of each of the shopping center local communication terminals from among the product information of the entire shopping center.

In step 407, the user local communication terminal 101 first displays product advertisement information included in the found product information, and returns to step 403.

Specifically, the user local communication terminal 101 analyzes the selected product information to detect product advertisement information of the selected product information, and first displays the detected product advertisement information on the display unit 313. Then, the user local communication terminal 101 analyzes product information unselected among the product information of the entire shopping center, detects product advertisement information, and then displays the detected product advertisement information on the display unit 313 in such a manner as to follow the first displayed product advertisement information. At this time, the user local communication terminal 101 generates a vibration/sound through at least one of the vibration unit 307 and the sound-processing unit 305, and informs the user of the display of the product advertisement information.

The user local communication terminal 101 detects a location of the router equivalent to identification information of the router which is automatically received or received in response to a request of the user, and expresses a location of the user in map information of the shopping center building in such a manner as to approach the detected location of the router. Then, through the display unit 313, the user local communication terminal 101 can output the map information of the shopping center building in which the location of the user is expressed.

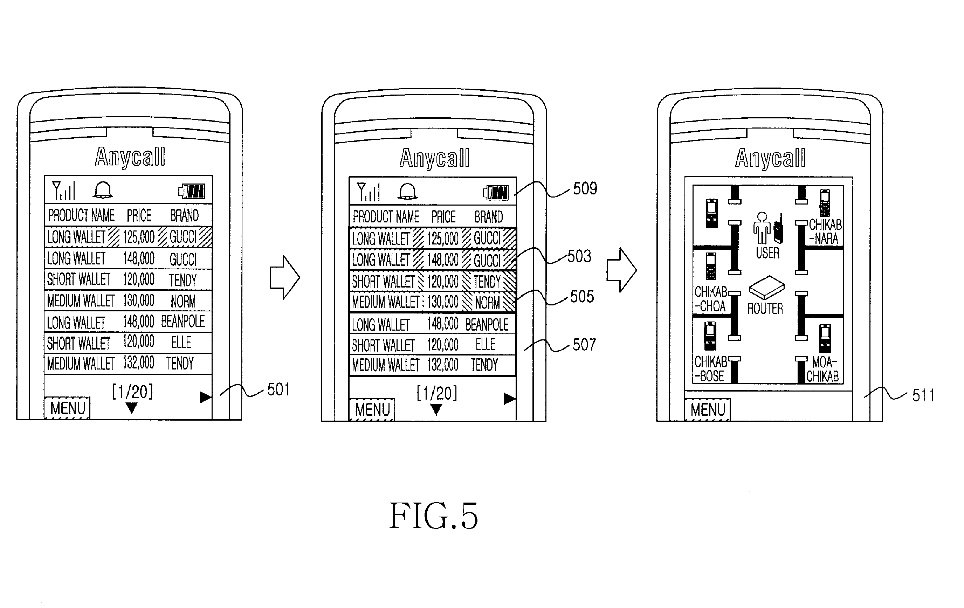

FIG. 5 is an illustrative view showing a screen image for providing product information of nearby stores by the user local communication terminal 101 according to a location of the user local communication terminal 101 according to an exemplary embodiment of the present invention.

In FIG. 5, a screen image 501 represents product advertisement information of the entire shopping center displayed by the user local communication terminal 101. Specifically, the user local communication terminal 101 receives product information of the entire shopping center from a router, stores the received product information of the entire shopping center therein, analyzes the stored product information of the entire shopping center to detect product advertisement information of the entire shopping center, and displays the detected product advertisement information of the entire shopping center as shown in the screen image 501.

Also, a screen image 509 represents product advertisement information of stores located near the user local communication terminal 101, which is first displayed by the user local communication terminal 101, among the product advertisement information of the entire shopping center. Specifically, the user local communication terminal 101 receives identification information of each of stores located near the user local communication terminal 101 from an optional router. Then, the user local communication terminal 101 finds product information including the received identification information of the nearby stores from among the stored product information of the entire shopping center, analyzes the found product information to detect product advertisement information, and then displays the detected product advertisement information first, as shown in screen images 503 and 505. Then, the user local communication terminal 101 analyzes product information which does not include the received identification information of each of the stores among the stored product information of the entire shopping center, detects product advertisement information, and then displays the detected product advertisement information as shown in a screen image 507 in such a manner as to follow the first displayed product advertisement information.

Also, a screen image 511 represents map information of the shopping center building displayed by the user local communication terminal 101, in which a current location of the user is expressed. Specifically, when receiving identification information of an optional router from the optional router, the user local communication terminal 101 detects a location of the optional router based on the received identification information of the optional router. Then, the user local communication terminal 101 determines a location of the user in such a manner as to approach the detected location of the optional router, and expresses the determined location of the user in the map information of the shopping center building. Then, the user local communication terminal 101 displays the map information of the shopping center building, in which the location of the user is expressed, as shown in the screen image 511.

Through the process as described above, the user local communication terminal 101 can first display the product advertisement information of the nearby stores according to the current location of the user, and can inform the user of displaying the product advertisement information of the nearby stores by using at least one of a vibration and sound. Then, the user local communication terminal 101 can provide the user with the map information of the shopping center building in which the location of the user is expressed.

Meanwhile, while the present invention has been shown and described with reference to certain exemplary embodiments thereof, it will be understood by those skilled in the art that various changes in form and details may be made therein without departing from the spirit and scope of the invention. Therefore, the spirit and scope of the present invention must be defined not by described embodiments thereof but by the appended claims and equivalents of the appended claims.

In an embodiment of the present invention, disclosed are a user local communication terminal (i.e. a user node), a router (i.e. a relay node) and a shopping center local communication terminal, and each of the nodes can be implemented by a terminal capable of local communication. Namely, the router can be implemented by a general local communication terminal.

Also, in an embodiment of the present invention, as a scheme of providing product information from a router to a user terminal, a scheme of broadcasting to all user terminals to which the router can transmit information may be used. Further, it goes without saying that the product information may be provided to a particular user terminal or grouped user terminals.

As described above, a system and a method according to the present invention can first provide a user with product advertisement information provided by stores located around the user according to a current location of the user.

## Claims

1. A method for providing product information by a system capable of local communication, the method comprising:
receiving product information and cell identification information of each of multiple cells provided by each of the multiple cells located in a predetermined area;
collecting the product information and the cell identification information received from each of the multiple cells; and
transmitting at least some of the collected product information and cell identification information to a terminal located in a coverage area by using the local communication.

2. The method of claim 1, further comprising receiving, by the terminal, at least some of the product information and the cell identification information and first displaying product information of a cell capable of current local communication reception among the received product information.

3. The method of claim 2, wherein, in first displaying product information of a cell capable of current local communication reception among the received product information, any of predetermined character colors and background colors for displaying product information is changed to a different color, and the different color is displayed.

4. The method of one of claim 1 to 3, wherein the system corresponds to a router capable of the local communication.

5. The method of one of claim 1 to 4, wherein the local communication corresponds to either ZIGBEE®, BLUETOOTH®, or Ultra-WideBand (UWB).

6. The method of one of claim 1 to 5, wherein the product information comprises at least one of a product name, a price, a brand, a store name, a location of a store, and a telephone number of the store.

7. The method of one of claim 1 to 6, wherein collecting the product information and the cell identification information received from each of the multiple cells comprises:
transmitting the product information received from the cell to a gateway; and
receiving entire product information obtained by collecting several pieces of the product information from the gateway.

8. The method of one of claim 1 to 7, further comprising:
transmitting the collected product information and cell identification information to a terminal existing in a coverage area by using the local communication;
receiving, by the terminal, the collected product information and cell identification information, and detecting a location of the terminal based on location information corresponding to previously-stored cell identification information and identification information of a cell capable of current local communication; and
displaying, by the terminal, the detected location of the terminal along with a map around the terminal.

9. A system capable of local communication for providing product information, the system comprising:
a communication unit for performing the local communication,
wherein the system receives product information and cell identification information of each of multiple cells provided by each of the multiple cells located in a predetermined area, collects the product information and the cell identification information received from each of the multiple cells, and transmits at least some of the collected product information and cell identification information to a terminal located in a coverage area by using the local communication.

10. The system of claim 9, wherein the terminal receive at least some of the product information and the cell identification information, and first displaying product information of a cell capable of current local communication reception among the received product information.

11. The system of claim 10, wherein, in first displaying product information of a cell capable of current local communication reception among the received product information, the terminal changes any of predetermined character colors and background colors for displaying product information to a different color, and displays the different color.

12. The system of one of claim 9 to 11, wherein the system corresponds to a router capable of the local communication.

13. The system of one of claim 9 to 12, wherein the product information comprises at least one of a product name, a price, a brand, a store name, a location of a store, and a telephone number of the store.

14. The system of one of claim 9 to 13, wherein, in collecting the product information and the cell identification information received from each of the multiple cells, the system transmits the product information received from the cell to a gateway, and receives entire product information obtained by collecting several pieces of the product information from the gateway.

15. The system of one of claim 9 to 14, wherein the system further includes: transmitting the collected product information and cell identification information to a terminal existing in a coverage area by using the local communication, receiving the collected product information and cell identification information through the terminal, detecting a location of the terminal based on location information corresponding to previously-stored cell identification information and identification information of a cell capable of current local communication, and displaying the detected location of the terminal along with a map around the terminal on the terminal.
